# EUROPEAN PATENT SPECIFICATION

(11) **EP 3 119 192 B1**
(45) Date of publication and mention of the grant of the patent: **07.02.2018**
(21) Application number: 14809673.8
(22) Date of filing: 01.12.2014
(51) Int. Cl.: A01K 11/00

(54) **METAL EAR TAG WITH OVERMOULDED COVER FOR TRANSPONDER HOUSING**
METALLOHRMARKE MIT UMGOSSENER ABDECKUNG FÜR TRANSPONDER-GEHÄUSE
ETIQUETTE D'OREILLE METALLIQUE AYANT UN REVÊTEMENT SURMOULE POUR UN LOGEMENT DE TRANSPONDEUR

(30) Priority: 21.03.2014 GB 201405105
(43) Date of publication of application: 25.01.2017
(73) Proprietor: Shearwell Data Limited, Minehead, Somerset TA24 7AS (GB)
(72) Inventor: WEBBER, Richard, Minehead Somerset TA24 7AS (GB)
(74) Representative: Johnson, Richard Alan
(86) International application number: PCT/GB2014/053559
(87) International publication number: WO 2015/140486

(56) References cited:
- WO-A1-2014/015384
- DE-U1- 20 018 364
- GB-A- 2 496 904

## Description

### FIELD OF THE INVENTION

The invention relates to devices for animal, e.g. livestock, identification, and in particular to ear tags which carry electronic transponders, e.g. passive radiofrequency identification (RFID) circuitry.

### BACKGROUND TO THE INVENTION

Identifying animals using an ear tag is well known. A typical ear tag has first and second parts which can be opposed on opposite sides of the animal's ear. Usually a sharp male part with a barbed tip is pushed through the animal's ear into a female part in which its tip is irreversibly trapped, so that the tag cannot thereafter be removed. The male and female parts may be separate, but it is common to provide them at opposite ends of a single element (e.g. strip of metal) which folds around the edge of the ear in a loop, making unauthorised removal of the device more difficult.

As the use of electronic identification systems has become the norm for livestock management, there have been a number of proposals for incorporating electronic transponders into ear tags. For example, WO 91/10982 and WO 95/04455 disclose an ear tag in which the transponder sits in an axial cavity of the spike on the male portion. EP 1 084 614 describes a discrete transponder housing with a small loop for attaching to a separate (e.g. conventional) tag. US 4,718,697 shows the transponder sandwiched between sheets defining two capsule halves which are welded together. Other documents describe flat annular transponder modules. EP 0 754 406 has a transponder in the form of a washer which fits around the male spike of a tag. WO 99/45760 shows a female component in the form of a disc with the transponder potted or encapsulated adjacent its rim. US 5,588,234 shows a conical tag body, either male or female, with the transponder coil extending around the base of the cone which has a central bore or spike for engagement with the other component. GB 2 392 138 discloses an ear tag in which a transponder is housed in a cavity formed adjacent the female part, where the cavity is closed to trap the transponder when the male part mates with the female part.

Often electronic transponders are incorporated in plastic ear tags. However, in some cases it may be desirable to use metal ear tags, e.g. for improved durability. US 7,533,482 discloses a metal ear clip with a plastic housing formed around one end thereof. The plastic housing encases an electronic transponder and includes a void which provides access for the other end of the clip in order to allow the clip to be closed. This arrangement leaves the plastic housing of the transponder open to wear and tear. The transponder housing may not be enclosed in metal however, since this may interfere with attempts to communicate with the transponder.

GB 2496904 discloses a metal ear tag with a frame wherein the frame defines an aperture. The transponder housing may be mounted in this aperture and held there either by an interference fit or by crimping projections on the frame around the housing.

DE-U-20018364 discloses an animal identification device according to the preamble of independent claim 1.

### SUMMARY OF THE INVENTION

At its most general, the present invention proposes securing a transponder housing to a metal tag using an overmoulding step. The transponder housing can be retained within a frame provided by the metal ear tag during the overmoulding process. The overmoulding process may provide an outer casing e.g. an overmoulded piece of plastic, which encases the transponder housing to secure it in place. The outer casing may not project widthways beyond the metal ear tag. With this arrangement, the metal part of the ear tag is outermost, which increases the durability of the ear tag, e.g. to allow it to be worn throughout the lifetime of the animal. Furthermore, the metal frame may not impede communication with the transponder, since the transponder is encased in plastic, not metal. Thus, the invention may provide an animal identification device that combines the durability of metal tags with the reliability of reading associated with plastic transponder housings as well as durable attachment of the transponder housing to the metal tag.

According to the invention as defined in claim 1, there is provided an animal identification device comprising: a metal ear tag having a first part comprising a frame and a first mating portion and a second part comprising a second mating portion, the frame further defining an aperture; and a transponder housing secured within the aperture in the frame by an overmoulded casing, wherein the first and second mating portions are locatable on opposite sides of an animal's ear and engageable to connect the first and second parts. The overmoulded casing provides a robust means of retaining the transponder housing within the frame.

The overmoulded casing may be shaped such that it does not extend widthways beyond the frame. In this way, the metal frame is outermost and thus forms a protective shell around the periphery of the transponder housing. Thus the brunt of the wear and tear is borne by the resilient metal portions of the device. Further, the overmoulded casing may completely encase the transponder housing, as well as covering part of the frame, meaning that the transponder housing is protected on all sides.

The overmoulded casing may form a single piece. The overmoulded casing may be formed from any suitable overmoulding material, e.g. polymer etc. The overmoulded casing may be rigid.

The transponder housing may comprise a transponder chip (e.g. an RFID chip) mounted on or within a protective element. For example, the RFID chip may be permanently encased, i.e. the protective element may be moulded around the chip. Alternatively the protective element may comprise a cavity for receiving the chip prior to mounting the transponder housing in the frame. The protective element may be made of plastic. The protective element may be made of a different material from the overmoulded casing. This may allow the material of the overmoulded casing to be selected to have e.g. a lower melting point than the protective element, which in turn allows the overmoulding to proceed without damaging the transponder housing.

The transponder housing may be retained, e.g. clipped or held by interference fit, in the aperture before overmoulding. For example, the aperture may comprise a plurality of inwardly directed projections which mate with cooperating recessed portions on the transponder housing. Alternatively, the transponder housing may be held in the correct position by an interference fit due to the aperture being slightly smaller than the transponder housing. In such cases, the transponder housing may be made of a material which exhibits a degree of resilient deformation (e.g. solid nylon) to allow the interference fit to be formed easily. A further alternative is that features of the overmoulding apparatus itself help retain the transponder housing in position, e.g. a mould for the overmoulded element may be designed to aid in the correct positioning of the transponder housing.

The metal ear tag may comprise a strip of metal. In this case the first mating portion may be located along the strip of metal away from the aperture. The width of the metal strip may be greater than the width of the transponder housing. The strip of metal may further be folded to form first and second legs, which correspond to the first and second parts respectively. The metal strip may be folded after the overmoulded casing is in place. Alternatively, the strip may be folded before overmoulding occurs.

The first and second mating portions may comprise a male part having a pointed tip and a female part for receiving the pointed tip. The female part may be located on the first part separately from the aperture.

The device may include anti-tamper features arranged to break one or both of the first and second mating portions if they are forced apart after they are secured together. For example, the female part for receiving the pointed tip may comprise one or more lines or points of weakness at which the female part may break, shear or fracture upon application of a certain force. In one example, the female part includes a rim defining an aperture for receiving the male part, and a crossbar spanning the rim. The pointed tip of the male part may bend around the crossbar when the male part and female part are secured together. The points of weakness may be laterally opposed notches formed in the rim, e.g. at opposite ends of the crossbar. The male part may have a preferential fold line (e.g. formed by notches or the like) at which it deforms when bent around the crossbar. The preferential fold line may facilitate formation of a sharp bend. Herein is also disclosed a method of securing a transponder housing to a metal animal identification tag, the method comprising positioning the transponder housing within an aperture formed within the metal animal identification tag; and overmoulding a retaining casing on the metal animal identification tag, wherein the retaining casing secures the transponder housing to the metal animal identification tag. An advantageous result of overmoulding the retaining casing is that this provides a robust, permanent means of retaining the transponder housing on the metal animal identification tag.

The overmoulding step may result in the retaining casing encasing the transponder housing. The overmoulding step may result in the retaining casing forming a single piece. Thus, the transponder housing may be protected on all sides, and may be secured to the frame in a robust manner since the retaining casing may form a contiguous part which fully encases the transponder housing and may also fill any gaps between the transponder housing and the metal animal identification tag.

The overmoulded casing may be formed from any suitable overmoulding material, e.g. polymer etc. The overmoulded casing may be rigid.

The overmoulding step may be performed at a temperature lower than the melting point of the material of the transponder housing. In this way, the transponder housing is protected from damage due to overheating.

The retaining casing may be moulded to a shape which does not extend widthways beyond the frame. This means that the frame is outermost and thus forms a protective shell around the retaining casing and transponder housing.

Locating the transponder housing within the aperture may be aided by mounting the transponder housing to the frame prior to performing the overmoulding step. This mounting may be achieved by mating a plurality of projections directed inwardly into the aperture with a set of cooperating recessed portions on the transponder housing. Alternatively, the transponder housing may be mounted to the frame via an interference fit with the frame itself.

The overmoulding step may comprise any conventional moulding technique. Such techniques are well known in the art, e.g. injection moulding.

### BRIEF DESCRIPTION OF THE DRAWINGS

Examples of the invention are described in detail below with reference to the accompanying drawings, in which:
Figs. 1A to 1D show stages in the assembly of a device according to the invention, in which:
Fig. 1A is a perspective view of the strip of metal and the transponder housing;
Fig. 1B is a perspective view of the transponder housing mounted into the metal strip;
Fig. 1C is a perspective view of the assembly of Fig. 1C, once a piece of plastic has been moulded over the transponder housing;
Fig. 1D is a perspective view of the fully assembled product folded to shape and ready to receive an ear;
Fig. 2 is a flow chart detailing the steps in the process of forming a device in accordance with the present invention;
Fig. 3A shows perspective and side views of a device according to the invention before application;
Fig. 3B shows perspective and side views of the device shown in Fig. 3A after application; and
Fig. 3C shows perspective and side views of the device shown in Figs. 3A and 3B after tampering.

### DETAILED DESCRIPTION; FURTHER OPTIONS AND PREFERENCES

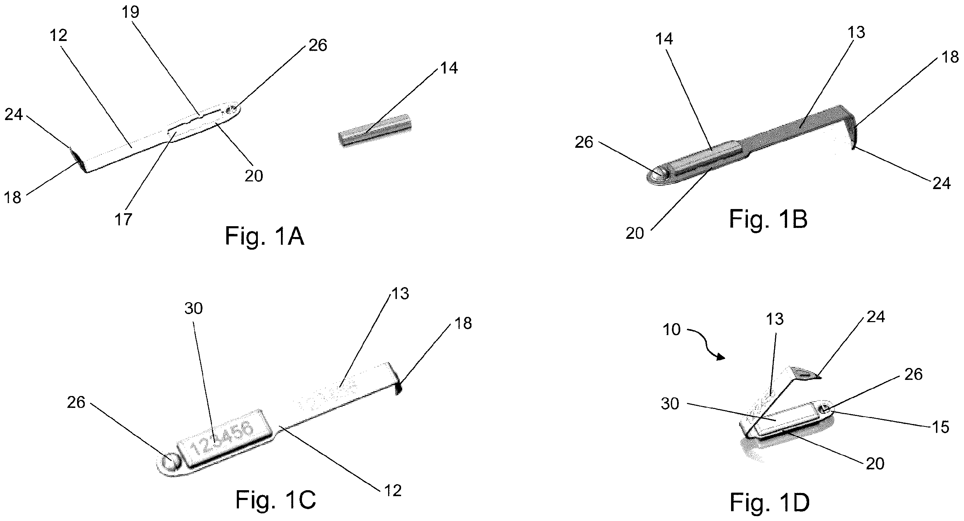

Figs. 1A, 1B, 1C and 1D show stages in the assembly of an animal identification device 10 that is an embodiment of the present invention. The animal identification device 10 comprises an ear tag 12, formed from a strip of metal, and a transponder housing 14, formed from a plastic material such as solid nylon, mounted on the ear tag 12 and secured in place with a piece of overmoulded plastic 30.

Fig. 1A shows components of the device separated into individual parts. One component is the metal tag 12 formed from a metal strip. At a first end of the strip of metal, a female mating portion is formed. In this example, the female mating portion comprises a hemispherical "bubble" depression 26 that is stamped into the strip of metal and a locking bar which spans across the mouth of the depression 26. At a second end of the strip of metal, opposite to the first end, a male mating portion 18 is formed. In the male mating portion 18, the strip of metal tapers to a sharp terminal point 24. The strip of metal also comprises a frame 20 which defines an aperture 17. The aperture 17 is centrally located and runs along the length of the metal strip 12. The metal strip 12 therefore provides an open rectangular frame 20. There is also a plurality of projections 19 directed inwardly into the aperture.

Another component shown in Fig. 1 is a transponder housing 14. The transponder housing 14 is a substantially cuboidal element having an indented channel around its side surfaces for receiving the inwardly directed projections 19 of the aperture 17. The cross-sectional area of the transponder housing 14 at the indented channel may be slightly greater than the area of the aperture 17 at the projections 19 so that the transponder housing is retained in the frame 20 by an interference fit. The transponder housing 14 may be made of a material that exhibits resilience, which enables it to be mounted in the frame by pushing it through the aperture 17 and held there by an interference fit.

Fig. 1B shows the transponder housing 14 positioned within the aperture 17 defined by the frame 20. In this example it is held there by an interference fit with the inwardly directed projections 19.

Parts of the transponder housing project above and below the metal strip 12. However, the width of the transponder housing 14 is less than the width of the frame 20 so that the transponder housing 14 does not project outwardly (widthways) further than frame 20 of the metal ear tag 12. Once the transponder housing 14 is mounted in the frame 20, the device comprises a sub-assembly ready for an overmoulding process. In the overmoulding process, a retaining casing 30 is overmoulded on the tag 12 to encapsulate and thereby secure the transponder housing in place.

Fig. 1C shows a result of the overmoulding process. The retaining casing 30 (or overmoulded element) has been moulded over the transponder housing and part of the frame. The retaining casing 30 covers the parts of the transponder housing 14 which project above the frame 20, as well as the parts of the transponder housing which project below the frame. The retaining casing 30 fills any gaps between the transponder housing 14 and the frame 20. Such gaps may occur for example because the inwardly directed projections 19 are the only points of contact between the frame 20 and the transponder housing 14. Thus, the provision of inwardly directed projections 19 may provide a balance between holding the transponder housing 14 in place to aid in moulding the retaining casing 30 over the transponder housing and the formation of a robust means for securing the transponder housing in place by enabling the part of the retaining casing moulded over the top of the transponder housing to be formed contiguously with the part of the retaining casing moulded over the bottom of the transponder housing by providing many points of contact.

Additionally or alternatively, it may be preferable for the transponder housing 14 to be shorter lengthways than the aperture 17, i.e. to deliberately provide a gap between the transponder housing 14 and the frame 20 which the retaining casing 30 fills. This may allow the retaining casing 30 moulded over the top of the transponder housing 14 to be contiguous with the retaining casing 30 moulded over the bottom of the transponder housing. This may be particularly advantageous when there are no inwardly directed projections 19, i.e. when the transponder housing is held in the frame 20 by an interference fit directly with parts of the frame itself.

Another purpose of the retaining casing 30 is to provide a protective layer over the top and bottom surfaces of the transponder housing 14. The retaining casing 30 may form one single piece. Further, the retaining casing 30 is wider and/or longer than the aperture 17, thus securing the transponder housing 14 in place. However, the retaining casing 30 does not extend widthways beyond the frame 20. In this way, the frame 20 of the metal ear tag 12 is exposed along the length of the overmoulded plastic 30. The side surfaces of the retaining casing 30 are therefore protected from wear and tear, prolonging the working lifetime of the device.

The retaining casing 30 is different from that used in the transponder housing 14. The retaining casing 30 may have the following properties: transparency to RF signals; resilience to outdoor environmental conditions (e.g. heat, cold, sunlight, moisture, farm chemicals etc.); durability; and a lower melting point than the plastic of the transponder housing 14. It is desirable also that the retaining casing 30 is capable of being marked with visible dyes etc. so that the tag may be labelled for visual identification, as shown in Fig. 1C. Additionally or alternatively, information may be recorded in a visible manner on the metal parts of the device e.g. by stamping or etching as shown in Figs. 1C and 1D.

Fig. 1D shows the fully assembled device 10 ready for attachment to the ear of an animal. The strip of metal 12 is folded around its midpoint to form two legs 13, 15, which extend away from the folded region. The female mating portion 26 is located at the end of first leg 15 distal from the folded region. The male mating portion 18 is on the end of second leg 13 distal to the folded region. The end of the second leg 13 is folded downwards so that the male mating portion 18 is orientated substantially perpendicular to the second leg 13. The folded region in the strip of metal that defines the first and second legs 13, 15 causes the female mating portion 16 and the male mating portion 18 to become opposed to one another, with a gap in between into which an animal's ear can be inserted.

In use, after the animal's ear is inserted, the two legs 13, 15 can be brought together e.g. using a suitable clamp, whereby the pointed end 24 of the male mating portion 18 is received in the depression 26 and defected thereby to clamp around the locking bar 22. A permanent connection between the male and female mating portions is thereby created.

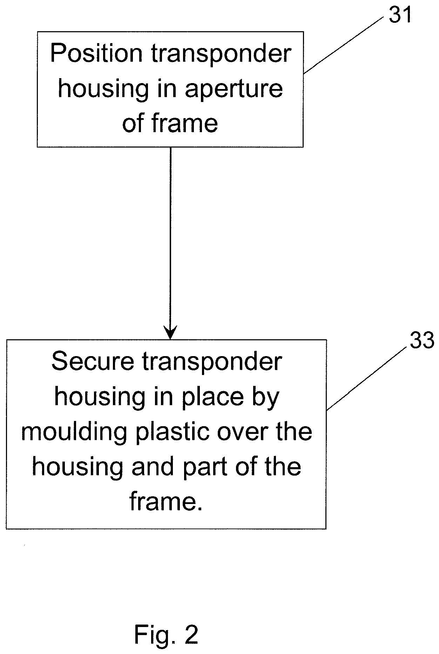

Fig. 2 is a flowchart that depicts a method of assembling an animal identification tag that is an embodiment of the invention. The method comprises a first step 31 in which a transponder housing is positioned in an aperture defined by a frame, the frame forming part of a metal ear tag for an animal. Once the transponder housing is in the desired position, a second step 32 is performed.

The second step 32 comprises moulding plastic over the transponder housing and part of the frame to secure the transponder housing in place relative to the frame. The overmoulded plastic formed in this step may comprise forming a single piece of plastic to encase the transponder housing and secure it in place. Alternatively, the housing may be secured using two or more moulding stages, whereby the retaining casing forms a composite part, comprising two or more components.

It may be desirable to provide means to hold the transponder housing within the aperture in the frame prior to moulding plastic over the transponder housing. This holding step may form part of the first step 31 in Fig. 2. Holding the transponder housing within the aperture in the frame may be achieved by an interference fit between the frame and the transponder housing. Alternatively, the frame may have a plurality of projections directed into the aperture, and an interference fit may be formed between the transponder housing and the plurality of projections. Another possibility is that no interference fit is necessary because the mould for the moulding step may be shaped so as to hold the transponder housing in the desired position. The ear tag and the transponder housing may then be positioned correctly relative to one another, with help from the mould, as part of step 31.

Moulding methods are well known in the art. An example of a suitable method is injection moulding.

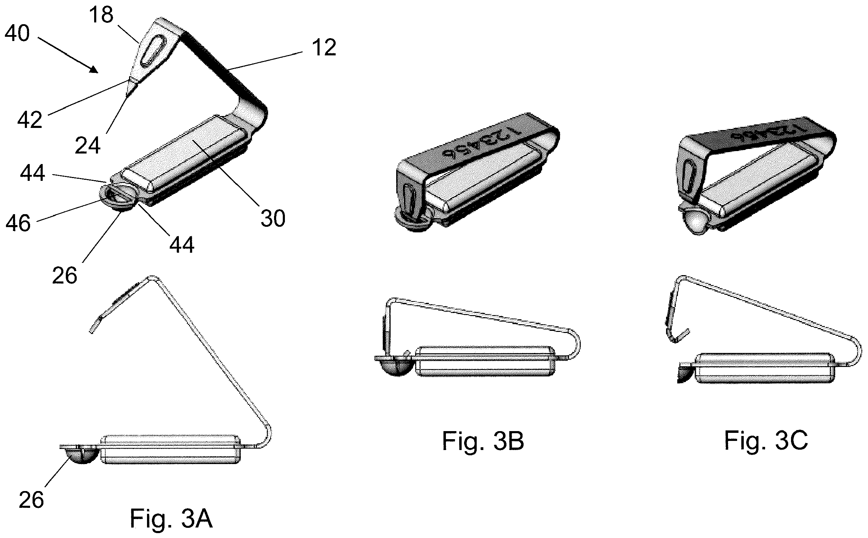

Figs. 3A, 3B and 3C illustrate an animal identification device 40 that is another embodiment of the invention. Features in common with the embodiment described above with reference to Figs. 1A, 1B, 1C and 1D are given the same reference number and are not discussed again.

In this embodiment, the animal identification device 40 is provided with anti-tamper features which cause the device to become unusable if forced open. The anti-tamper features comprise a preferential fold line 42 formed in the male mating part 18 and a pair of laterally opposed notches 44 formed in the rim of the depression 26, on opposite sides of a crossbar 46 that extends over the mouth of the depression 26.

The preferential fold line 42 may be created by formed a pair of laterally opposed notches in the edge of the male mating part 18 (i.e. on the edges of the spike). Alternatively or additionally, the preferential fold line 42 may have a reduced thickness compared with the rest of the male mating part 18, or the male mating part 18 may be deformed along the preferential fold line 42 before assembly, e.g. as part of the manufacture process.

As shown in Fig. 3B, when the animal identification device 40 is applied (i.e. closed on or around an animal's ear), the tip of the male mating part 18 curls around the inside of the depression 26, where it is retained by the crossbar 46. The presence of the preferential fold line 42 causes the tip to form a sharp bend beneath the crossbar.

As shown in Fig. 3C, if the animal identification device 40 is subsequently forced open, the bent tip catches under the crossbar. The laterally opposed notches 44 create points of weakness in the rim of the depression 26 which mean that the rim breaks (e.g. shears or fractures) under less force than is required to straighten the bent tip against the crossbar 46. Accordingly, if the animal identification device 40 is opened with sufficient force, half of the depression 26, including the crossbar 46 will break away from the device, rendering it inoperable.

As a result, it is not possible to interfere with the overmoulded portion 30 without breaking the mating portions of its metal ear tag frame.

## Claims

1. An animal identification device (10) comprising:
a metal ear tag (12) having a first part comprising a frame (20) and a first mating portion (26) and a second part comprising a second mating portion (18), the frame further defining an aperture (17); and
a transponder housing (14) secured within the aperture (17) in the frame (20),
wherein the first and second mating portions (26, 18) are locatable on opposite sides of an animal's ear and engageable to connect the first and second parts,
**characterized in that**:
the transponder housing (14) is secured within the aperture (17) in the frame (20) by an overmoulded casing (30) that encases the transponder housing (14).

2. An animal identification device (10) according to claim 1, wherein the overmoulded casing (30) forms one single contiguous piece.

3. An animal identification device (10) according to any preceding claim, wherein the overmoulded casing (30) does not extend widthways beyond the frame (20).

4. An animal identification device (10) according to any preceding claim, wherein the overmoulded casing (30) is formed from a polymer.

5. An animal identification device (10) according to any preceding claim, wherein the overmoulded casing (30) is rigid.

6. An animal identification device (10) according to any preceding claim, wherein the transponder housing (14) is made of a different material from the overmoulded casing (30).

7. An animal identification device (10) according to any preceding claim, wherein the transponder housing (14) encases a radio frequency identification (RFID) chip.

8. An animal identification device (10) according to any preceding claim, wherein the metal ear tag (12) comprises a strip of metal and the first mating portion (26) is located along the strip of metal away from the aperture (17), and the width of the strip of metal is greater than the width of the overmoulded casing (30).

9. An animal identification device (10) according to claim 8, wherein the strip of metal is folded to form first and second legs (15, 13), which correspond to the first and second parts respectively.

10. An animal identification device (10) according to any preceding claim, wherein the first and second mating portions (26, 18) comprise a male part (18) having a pointed tip (24) and a female part (26) for receiving the pointed tip (24) .

11. An animal identification device (10) according to any preceding claim comprising anti-tamper features arranged to break one or both of the first and second mating portions (26, 18) if they are forced apart after they are secured together.

12. An animal identification device (10) according to claim 10, wherein the female part (26) comprises one or more lines or points of weakness (44) at which the female part is breakable upon application of a certain force.

13. An animal identification device (10) according to claim 12, wherein the female part (26) includes a rim defining an aperture for receiving the male part (18) and a crossbar (46) spanning the rim, and wherein the one or more lines or points of weakness (44) comprise laterally opposed notches formed in the rim at opposite ends of the crossbar.

14. An animal identification device (10) according to claim 13, wherein the male part (18) may have a preferential fold line (42) at which it is deformable to bend around the crossbar (46).

## Patentansprüche

1. Tieridentifikationsvorrichtung (10), umfassend:
eine Ohrmarke aus Metall (12), die einen ersten Teil, der einen Rahmen (20) und einen ersten Passabschnitt (26) umfasst, und einen zweiten Teil, der einen zweiten Passabschnitt (18) umfasst, aufweist, wobei der Rahmen ferner eine Durchgangsöffnung (17) definiert; und
ein Transpondergehäuse (14), das innerhalb der Durchgangsöffnung (17) im Rahmen (20) festgelegt ist,
worin der erste und der zweite Passabschnitt (26, 18) auf entgegengesetzten Seiten eines Tierohres anordenbar und so in Eingriff bringbar sind, dass sie den ersten und den zweiten Teil verbinden,
**dadurch gekennzeichnet, dass**:
das Transpondergehäuse (14) innerhalb der Durchgangsöffnung (17) im Rahmen (20) durch eine übergeformte Umhüllung (30) festgelegt ist, welche das Transpondergehäuse (14) einschließt.

2. Tieridentifikationsvorrichtung (10) gemäß Anspruch 1, worin die übergeformte Umhüllung (30) ein einzelnes, direkt anliegendes Stück bildet.

3. Tieridentifikationsvorrichtung (10) gemäß einem der vorangegangenen Ansprüche, worin die übergeformte Umhüllung (30) sich nicht der Breite nach über den Rahmen (20) hinaus erstreckt.

4. Tieridentifikationsvorrichtung (10) gemäß einem der vorangegangenen Ansprüche, worin die übergeformte Umhüllung (30) aus einem Polymer gebildet ist.

5. Tieridentifikationsvorrichtung (10) gemäß einem beliebigen vorangegangenen Anspruch, worin die übergeformte Umhüllung (30) steif ist.

6. Tieridentifikationsvorrichtung (10) gemäß einem beliebigen vorangegangenen Anspruch, worin das Transpondergehäuse (14) aus einem Material hergestellt ist, das sich von demjenigen der übergeformten Umhüllung (30) unterscheidet.

7. Tieridentifikationsvorrichtung (10) gemäß einem beliebigen vorangegangenen Anspruch, worin das Transpondergehäuse (14) einen Hochfrequenz-Identifikations (RFID) -Chip einschließt.

8. Tieridentifikationsvorrichtung (10) gemäß einem beliebigen vorangegangenen Anspruch, worin die Ohrmarke aus Metall (12) einen Metallstreifen umfasst, und der erste Passabschnitt (26) entlang des Metallstreifens, weg von der Durchgangsöffnung (17), angeordnet ist, und die Breite des Metallstreifens größer als die Breite der übergeformten Umhüllung (30) ist.

9. Tieridentifikationsvorrichtung (10) gemäß Anspruch 8, worin der Metallstreifen zusammengeklappt ist, um einen ersten und einen zweiten Schenkel (15, 13) zu bilden, die dem ersten beziehungsweise zweiten Teil entsprechen.

10. Tieridentifikationsvorrichtung (10) gemäß einem beliebigen vorangegangenen Anspruch, worin der erste und der zweite Passabschnitt (26, 18) einen Einschubteil (18) mit einer zugespitzten Spitze (24) und einen Aufnahmeteil (26) zum Aufnehmen der zugespitzten Spitze (24) umfassen.

11. Tieridentifikationsvorrichtung (10) gemäß einem beliebigen vorangegangenen Anspruch, umfassend originalitätssichernde Merkmale, die so angeordnet sind, dass sie einen oder beide des ersten und des zweiten Passabschnitts (26, 18) brechen, wenn diese auseinandergedrückt werden, nachdem sie aneinander festgelegt worden sind.

12. Tieridentifikationsvorrichtung (10) gemäß Anspruch 10, worin der Aufnahmeteil (26) eine oder mehrere Schwächungs-Linien oder -Stellen (44) umfasst, an denen der Aufnahmeteil bei Aufbringung einer bestimmten Kraft brechbar ist.

13. Tieridentifikationsvorrichtung (10) gemäß Anspruch 12, worin der Aufnahmeteil (26) einen Rand, der eine Durchgangsöffnung zum Aufnehmen des Einschubteils (18) definiert, und einen Quersteg (46), der sich über den Rand spannt, umfasst, und worin die eine oder die mehreren Schwächungs-Linien oder -Stellen (44) seitlich gegenüberliegende Kerben umfassen, die in dem Rand an entgegengesetzten Enden des Querstegs ausgebildet sind.

14. Tieridentifikationsvorrichtung (10) gemäß Anspruch 13, worin der Einschubteil (18) eine bevorzugte Knicklinie (42) aufweisen kann, an der dieser verformbar ist, um sich um den Quersteg (46) zu biegen.

## Revendications

1. Dispositif d'identification d'animal (10) comprenant :
une étiquette d'oreille métallique (12) ayant une première partie comprenant un cadre (20) et une première partie d'accouplement (26) et une seconde partie comprenant une seconde partie d'accouplement (18), le cadre définissant en outre une ouverture (17) ; et
un boîtier de transpondeur (14) fixé à l'intérieur de l'ouverture (17) dans le cadre (20),
dans lequel les première et seconde parties d'accouplement (26, 18) peuvent être positionnées sur des côtés opposés de l'oreille d'un animal et peuvent être mises en prise pour connecter les première et seconde parties,
**caractérisé en ce que** :
le boîtier du transpondeur (14) est fixé à l'intérieur de l'ouverture (17) dans le cadre (20) par une enveloppe surmoulée (30) qui recouvre le boîtier de transpondeur (14) .

2. Dispositif d'identification d'animal (10) selon la revendication 1, dans lequel l'enveloppe surmoulée (30) forme une pièce contiguë unique.

3. Dispositif d'identification d'animal (10) selon l'une quelconque des revendications précédentes, dans lequel l'enveloppe surmoulée (30) ne s'étend pas dans le sens de la largeur au-delà du cadre (20).

4. Dispositif d'identification d'animal (10) selon l'une quelconque des revendications précédentes, dans lequel l'enveloppe surmoulée (30) est formée d'un polymère.

5. Dispositif d'identification d'animal (10) selon l'une quelconque des revendications précédentes, dans lequel l'enveloppe surmoulée (30) est rigide.

6. Dispositif d'identification d'animal (10) selon l'une quelconque des revendications précédentes, dans lequel le boîtier de transpondeur (14) est constitué d'un matériau différent de l'enveloppe surmoulée (30).

7. Dispositif d'identification d'animal (10) selon l'une quelconque des revendications précédentes, dans lequel le boîtier de transpondeur (14) recouvre une puce d'identification radiofréquence (RFID).

8. Dispositif d'identification d'animal (10) selon l'une quelconque des revendications précédentes, dans lequel l'étiquette d'oreille métallique (12) comprend une bande de métal et la première partie d'accouplement (26) est située le long de la bande de métal de manière éloignée de l'ouverture (17), et la largeur de la bande de métal est supérieure à la largeur de l'enveloppe surmoulée (30).

9. Dispositif d'identification d'animal (10) selon la revendication 8, dans lequel la bande de métal est pliée pour former des première et seconde pattes (15, 13), qui correspondent respectivement aux première et seconde parties.

10. Dispositif d'identification d'animal (10) selon l'une quelconque des revendications précédentes, dans lequel les première et seconde parties d'accouplement (26, 18) comprennent une partie mâle (18) ayant une extrémité pointue (24) et une partie femelle (26) destinée à recevoir l'extrémité pointue (24).

11. Dispositif d'identification d'animal (10) selon l'une quelconque des revendications précédentes, comprenant des caractéristiques anti-violation conçues pour casser l'une ou les deux première et seconde parties d'accouplement (26, 18) si elles sont séparées de manière forcée après avoir été fixées ensemble.

12. Dispositif d'identification d'animal (10) selon la revendication 10, dans lequel la partie femelle (26) comprend une ou plusieurs lignes ou points de faiblesse (44) au niveau desquels la partie femelle peut être cassée lors de l'application d'une certaine force.

13. Dispositif d'identification d'animal (10) selon la revendication 12, dans lequel la partie femelle (26) comprend un bord définissant une ouverture pour recevoir la partie mâle (18) et une barre transversale (46) chevauchant le bord, et dans lequel la ou les lignes ou points de faiblesse (44) comprennent des encoches latéralement opposées formées dans le bord au niveau des extrémités opposées de la barre transversale.

14. Dispositif d'identification d'animal (10) selon la revendication 13, dans lequel la partie mâle (18) peut avoir une ligne de pliage préférentielle (42) au niveau de laquelle elle est déformable en étant incurvée autour de la barre transversale (46).
